# EUROPEAN PATENT APPLICATION

(11) **EP 0 765 738 A1**
(43) Date of publication of application: **02.04.1997**
(21) Application number: 96909357.4
(22) Date of filing: 11.04.1996
(51) Int. Cl.: B32B 5/02, B32B 21/02

(54) **PLATY OR MOLDED MATERIAL AND METHOD OF MANUFACTURING THE SAME**

(30) Priority: 12.04.1995 JP 111134/95; 06.10.1995 JP 286617/95
(71) Applicant: Onnetsu Kankyo Kaihatsu Inc., Sapporo-shi Hokkaido 063 (JP); Toa Shoji Co.,Ltd., Tokyo 169 (JP)
(72) Inventor: MITSUBOSHI, Hiroshi, Hokkaido 005 (JP); KOBAYASHI, Atsushi, Tokyo 189 (JP); NISHIYAMA, Toshiaki, Hokkaido 047 (JP)
(74) Representative: Vossius, Tilman
(86) International application number: JP9601013
(87) International publication number: WO9632251

(57) **Abstract**

Natural vegetable fibers, which create a stronger bond with resins than can normally be obtained using manmade fibers, are used to provide a board or other molded material characterized by its high moisture permeability and strength. This object is achieved by first collecting palm fibers, which consist of thick individual fibers with large gaps in between, and binding them together securely with resin to form a fiber mat. This is then reinforced by using curable resin to bond said fiber mat with a sheet of woven or nonwoven fabric made from natural vegetable fibers such as hemp or with a sheet made of thin strips of bamboo, all of which have a high tensile strength and a high modulus of tensile elasticity. The invention also includes a method for the manufacture of such boards or other molded materials.

## Description

### FIELD OF THE INVENTION

The invention relates to a material molded into a shape such as that of a wood based fiber board or else into such other shape as may be required, said material being characterized by its excellent moisture permeability and strength.

### BACKGROUND ART

Traditionally, when a heat insulating layer made of a fiber based material such as glass wool is inserted between the walls of a wooden house or similar building, an additional ventilation layer is also inserted between the outer wall and the heat insulating layer to enable any water vapor inside the house to escape into the outside air. Normally, water vapor inside the house passes through the heat insulating layer into the ventilation layer where it rises to be discharged into the outside air from under the eaves. In such case, a windbreak layer must also be inserted to separate the heat insulating layer and the ventilation layer from each other. The windbreak layer, which serves to hold the heat insulating layer in position, must transmit moisture with ease if it is to facilitate the smooth permeation of water vapor through to the ventilation layer.

The windbreak layer has conventionally been made from materials such as polyethylene based nonwoven fabrics but this has been a source of problems when materials such as glass wool are used to form the heat insulating layer. The main disadvantage has been the way in which the force of expansion of the heat insulating layer has tended to push the nonwoven fabric layer out of shape, thereby reducing the width of the ventilation layer and sometimes blocking it altogether. This problem is particularly common in colder climatic zones where large amounts of glass wool are used for insulating purposes [See Japanese Architectural Standard Specifications, and the interpretation of said specifications in JASS24 Thermal Insulation (published by the Architectural Association of Japan)]. It has been possible to remedy this problem to some extent by covering the outside surface of the heat insulating layer with sheathing board, a kind of insulation fiber board with a comparatively low density, which is secured in position with posts at either end and/or in the middle, beams, cross-beams and/or braces (The term brace is generally used to refer to diagonal bracing only. In the present specification, however, the term will be used in a broader sense to include a wide variety of diagonal bracing, furring strips and other reinforcing materials).

At the same time, however, while conventional sheathing board of the sort described above may well be strong enough to withstand the expansion force of the heat insulating layer, it is still not sufficiently strong in itself to function as a structural facing. There has thus been no alternative but to resort to the addition of structural materials of the sort described above to strengthen the areas around the sheathing boards.

### DISCLOSURE OF THE INVENTION

It is an object of the present invention, which is premised on the use of natural vegetable fibers, which creates a stronger bond with resins than can normally be obtained using manmade fibers, to provide a board or other molded material characterized by its high moisture permeability and strength. This object is achieved by first collecting palm fibers, which consist of thick individual fibers with large gaps in between, and binding them together securely with resin to form a fiber mat. This is then reinforced by using curable resin to bond said fiber mat with at least one woven or nonwoven fabric made from natural vegetable fibers such as hemp fibers or with at least one sheet made of thin strips of bamboo, all of which have a high tensile strength and a high modulus of tensile elasticity. It is also our intention to propose a method for the manufacture of such boards or other molded materials.

Braces, one of the structural materials referred to above, are fitted inside the heat insulating layer. Not only does the fitting of braces represent a separate job for the builder to perform, the space taken up by the braces necessarily also reduces the remaining space available for the heat insulating layer in similar measure.

It is thus a further object of the invention to resolve all the above problems at the same time by incorporating braces into the aforementioned boards or other molded materials and, in so doing, to provide a braced board or molded structural material which is a combination of woven or nonwoven fabric sheet made into an excellent reinforcing material by bracing.

The boards or other molded materials of the invention, the purpose of which is the attainment of the aforementioned objects, are made by applying layers of at least one woven or nonwoven fabric made from natural vegetable fibers such as hemp fibers or at least one sheet made of thin strips of a natural vegetable fiber such as bamboo to at least one side of and/or to the interior of a fiber mat made from palm fibers combined if necessary with some other natural vegetable fiber such as hemp fibers or bamboo fibers, impregnating said materials with a curable resin and by compression molding them into the required shape.

In using the term hemp, it is our intention to include both the types of hemp that provide us with bast fibers, such as jute, hemp, flax, mao and anbariasa, and the types of hemp that provide us with leaf, such as Manila hemp, sisal hemp, New Zealand flax and Mauritius hemp. Hemp fiber is the name for the fiber which is derived from the hemp plant. For the purposes of the present specification, the fiber of the jute plant should also be taken to be included within the meaning of the general term hemp. Hemp should also be understood to refer to combinations of various different natural vegetable fibers.

In the context of the present specification, the term palm fiber is used to mean any of the fibrous areas such as the bark of the palm, the base of the leaf stem and the inner rind of the fruits which are obtainable from varieties of palm such as coconut palms and oil palms. The term is also used to include the fiber obtainable from the emptied fruit bunches of the oil palm and combinations of different types of palm fiber.

The term woven fabric is used to mean the cloth knitted together crosswise from hemp yarn made by twisting together the fibers obtained from the hemp plant. Jute cloth is also included within this definition. The term nonwoven fabric, on the other hand, is used to mean the sort of fabric made by the dry processing of hemp fiber to form a web which is subsequently glued into the required shape using a natural rubber such as latex and then dried to form the finished fabric. The term is also used to refer to the thin fabric formed by wet forming and paper similarly formed by the wet forming of wood fiber. The term sheet should be understood to include items knitted (in a process very similar to that of weaving) from thin strips of bamboo and similar materials.

The term curable resin includes both thermosetting resins and reactive resins (i.e. room temperature setting resins).

Heat is also applied as and when necessary during the course of compression molding as referred to above.

The fiber mat, at least one woven fabric, nonwoven fabric and sheet used to make the aforementioned boards or other molded materials are made in each case from natural vegetable fibers. These have rougher surfaces than manmade fibers which enables them to form much stronger bonds with each other than is possible with manmade fibers. The so-called anchor effect (i.e. the effect whereby an adhesive infiltrates the interstices in the surface of the target material where it then solidifies to form the sort of strong bond that might otherwise be formed by a nail or a wedge of some sort) also enables such fabric to form an excellent bond with curable resins.

When the aforementioned fiber mat is made up of a mixture of natural vegetable fibers including, for example, hemp fibers and bamboo fibers, it appears that because of the difference in fiber diameters between palm fibers, which is about 100 to 600µm in diameter, and hemp fiber, which is about 5 to 30 µm in diameter, and bamboo fiber, which is about 10 to 200µm in diameter, the hemp and bamboo fibers tend to become entangled with the much thicker palm fibers at the points where they cross and, in so doing, they increase the strength of the bond between the palm fibers themselves.

Given the comparatively large diameter of palm fibers of about 100 to 600µm and accepting that the density of the fiber filling will also have a bearing on the final outcome, the palm fiber mat tends by and large to form such that fairly large interstices of about 100µm to 5mm are left between the individual fibers in the mat. The optimum size for such interstices is about 200µm to 3mm. The permeability of such fiber mat to moisture is thus extremely good. Woven fabrics, nonwoven fabrics and sheets of this type of material also allow the passage of air and are consequently also very permeable to moisture.

By varying the amount of curable resin or the degree of compression applied to the fiber mat at the forming stage, it is possible to obtain boards or other molded materials containing interstices of varying sizes and densities. This in turn enables the manufacturer to control the permeability of the finished board or other molded material. For example, by reducing the size of interstice in a board or other molded material to about 1 to 100µm or so, typically about 5 to 50µm, it is possible to create a high quality finished board or other molded material which will continue to allow the free passage of air but will not allow rain water to percolate.

Palm fibers are about 100 to 600µm in diameter, about 5 to 30cm long and have a tendency to become highly intertwined with each other. These characteristics are sufficient to ensure that boards and other molded materials made from palm fiber are strong enough to exert a firm hold on any nail hammered into their surface.

The woven fabric or sheet used in this invention exhibit outstanding levels of tensile strength and a high modulus of tensile elasticity for the simple reason that they are made from materials such as hemp fiber or thin strips of knitted or woven bamboo which themselves have a high level of tensile strength and a high modulus of tensile elasticity.

Nonwoven fabrics tend not to be as strong as bamboo sheets or as woven fabrics made from materials such as hemp but function effectively as retention materials for curable resins. Thus, by using a curable resin to create a strong bond between this type of woven fabric, nonwoven fabric or sheet and a fiber mat of one sort or another, it is possible to increase the strength of a finished board or other molded material without at the same time reducing its permeability to moisture. The reason for this is not clear but it seems possible that by using the woven fabric, nonwoven fabric or sheet impregnated with curable resin as the means for spreading curable resin throughout the finished board, it is also possible to increase the strength of the finished product without at the same time reducing its permeability to moisture. By applying the woven fabric, nonwoven fabric or sheet to one surface of a fiber mat, and more particularly by applying such materials to both surfaces of a fiber mat, it is possible to create a sandwich structure (i.e. a structural form in which the main material is strengthened by the addition to either side of it of other materials which are stronger and more rigid than said main material) and, in so doing, to increase both the bending strength and the modulus of bending elasticity of the finished board. Similarly, when the woven fabric, nonwoven fabric or sheet is introduced into the inside of a fiber mat, there is a concomitant increase not only in the tensile strength and modulus of tensile elasticity but also in the shearing strength, the modulus of transverse elasticity, the planar compressive strength and the planar modulus of compressive elasticity of the finished board or other molded material. Planar compressive strength refers to the strength exhibited in response to the application of a compressive force in a condition of plane stress. Furthermore, since the woven fabric and the sheet exhibit only a minimal change in size when water or moisture is absorbed, this serves also to limit the change in size during water or moisture absorption of a board or other molded material to the surface or interior of which such a woven fabric or sheet has been applied. This in turn limits the loss of strength of the board or other molded material when water or moisture is absorbed.

The interstices between the fibers of a palm fiber mat are large and this means that, when this type of mat is sprayed or otherwise impregnated with curable resin, the resin tends to spread itself evenly between the fibers throughout the mat to produce an overall uniformity in the distribution of strength in the finished board or other molded material.

The following effects can be obtained with a finished board or other molded material of this type. First, the large interstices between the thick palm fibers of a fiber mat combined with the air permeability of the woven fabric, the nonwoven fabric and the sheet is conducive to a high level of moisture permeability. At the same time, since the woven fabric and sheet are woven from hemp fiber or thin bamboo strips with high tensile strength and a high modulus of tensile elasticity, the fabric and the sheet themselves also exhibit the same high level of tensile strength and the same high modulus of tensile elasticity. Although nonwoven fabrics do not exhibit the same strength as fabrics such as the woven fabric or the bamboo sheet, they do have a valuable function as retention materials for curable resin and this helps increase the strength of the finished board. Natural vegetable fibers such as palm fibers form a strong bond with resins and, by reinforcing the fiber mat produced in this way with the woven fabric or the sheet with high tensile strength and a high modulus of tensile elasticity, it is possible to obtain a high level of overall strength in a material which loses little of its shape or strength when it absorbs water or moisture. Thus, by using boards or other molded materials of this type to form the windbreak layer of a house wall, not only is it possible to secure the smooth passage of water vapor from the interior of the house through into the ventilation layer, it is also possible to provide stable support for the heat insulating layer while at the same time using said boards or other molded materials to reinforce the structural sections around the windbreak layer.

There are other boards and molded materials which fall within the general description of the boards and other molded materials of the present invention but which are in practice about 3 to 25mm thick with a bending strength of about 300 to 5,000N/cm² and a coefficient of permeability of about 0.1 to 10µg/(m².s.Pa). These boards and other molded materials provide an excellent balance between strength and moisture permeability and this is to be preferred.

There are still other boards and molded materials which fall within the general description of the boards and other molded materials of the present invention and which consist of a fabric with a unit weight of about 100 to 1,200g/m² woven from hemp fibers and applied to at least one side and/or to the interior of a fiber mat. These boards and other molded materials combine outstanding strength and moisture permeability with a tendency to lose little of their shape or strength when absorbing water or moisture and this is to be preferred. Again, fabric woven from hemp fibers tends to be smoother than a sheet made from thin strips of bamboo and, given the additional simplicity of its basic weave structure, it is to be preferred.

There are yet other boards and molded materials which fall within the general description of the boards and other molded materials of the present invention but which consist specifically of oil palm fibers rather than just any sort of palm fibers.

By using oil palm fibers rather than other palm fibers in these types of boards and other molded materials, the manufacturer is able to cut down the amount of effort required to split (which may be known as 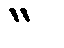 open 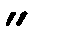 at a producing area) the basic raw material into individual fibers. This reduces the amount of energy expended in the manufacturing process and helps cut costs. In the case of coconut palm fibers, for example, the starting material must first be soaked in water for a long time to soften the coconut shell after which an inordinate amount of energy needs to be applied over a further long period to break the material down mechanically into its constituent fibers. An oil palm, on the other hand, is basically little more than fiber to start with. The splitting of oil palm fibers thus calls for nothing more than the break up of a bunch of empty fruits which can be achieved without steeping them in water and at the expenditure of very little energy.

The fibers of an oil palm tend also to have a more pronounced curve than those of a coconut palm with the result that the fibers become more strongly entwined with each other. They are also slightly larger in diameter than coconut palm fibers. Oil palm fibers thus exert a tighter hold over a nail hammered into them than do coconut palm fibers and this is to be preferred. The strength of curvature of a fiber can in fact be evaluated in terms of the ratio of the distance between the ends of the fiber in a curved state to the distance between those same ends when the fiber is pulled out gently into a straighter form. The smaller this ratio is, the greater is the degree of curvature.

Boards and other molded materials of this type have the following effect to offer. Since oil palm fibers have been used in place of coconut palm fibers, in addition to the benefits outlined above, the manufacturing process will also consume considerably less energy and this will enable significant cuts to be made in the costs of manufacture. The strength of curvature of oil palm fibers is greater than that of coconut palm fibers which means that the fibers tend to entwine more strongly with each other. Since the diameter of oil palm fibers is also slightly larger than that of coconut palm fibers, a board or other molded material incorporating oil palm fibers will tend to grip a nail hammered into it more strongly than a similar coconut palm fibers based board and this is to be preferred.

A good way of making the boards or other molded materials of the present invention involves mixing and adding, if necessary, an appropriate quantity of natural vegetable fibers such as hemp or bamboo fibers to already split palm fibers to form a fiber mat, applying at least one woven or nonwoven fabric consisting of at least one natural vegetable fibers such as hemp or at least one sheet made of thin strips of a material such as bamboo to at least one side and/or the interior of said fiber mat, impregnating the resultant material with curable resin and finally compression molding it into the required shape. The material can also be heated if necessary during the course of said compression molding process.

The braced boards or other molded materials of the present invention are made by incorporating a form of brace by adding it to at least one side and/or into the middle of the boards or other molded materials of the invention, which are made as explained above by mixing and adding, if necessary, an appropriate quantity of natural vegetable fibers such as hemp or bamboo fibers to already split palm fibers to form a fiber mat, by applying if necessary at least one woven or nonwoven fabric consisting of at least one natural vegetable fibers such as hemp or at least one sheet made of thin strips of a material such as bamboo to at least one side and/or the interior of said fiber mat, by impregnating the resultant material with curable resin and by compression molding it into the required shape. The term brace should be understood to include a range of belt shaped reinforcing materials such as diagonal brace and furring strips.

Such braced boards or other molded materials are able to function as reinforcement for other materials by virtue of their incorporation of a brace. Since braced boards or other molded materials actually incorporate a brace, the work of reinforcing a section of wall with braces is achieved simply by fitting said braced boards or other molded materials into position. Moreover, since the addition of a brace does not now involve any sort of intrusion into the heat insulating layer, there is no concomitant reduction in the space made available for said layer. If a woven or nonwoven fabric or a sheet is also added, this works together with the brace to reinforce the wall to which it is fitted.

Braced boards or other molded materials of the type described above provide the user with the following effect.

The incorporation of a brace into the body of said boards or other molded materials not only improves the work of construction by eliminating the need for the separate addition of a brace, it also enhances the heat insulating function by eliminating the reduction of heat insulating space which commonly results from the separate addition of a brace. Furthermore, by adding a woven or nonwoven fabric or else a sheet of some sort to braced boards or other molded materials, it is possible to make them into excellent reinforcing materials.

Braced boards and other molded materials such as those described above in connection with the present invention may equally be fitted with a plurality of braces spaced at intervals and more or less parallel with the sides of the boards or other molded materials to which they are fitted.

The spaces in between the braces of braced boards and other braced molded materials also function as a ventilation layer.

Braced boards or other braced molded materials of the type described above provide the user with the following effect.

Since in this case a plurality of braces are fitted at intervals parallel to the sides of the board or other braced molded materials, the spaces between the braces are effectively left clear to act as a ventilation layer.

### BRIEF DESCRIPTION OF THE DRAWINGS

Figure 1: A cross sectional view of the board of the first embodiment of the invention.
Figure 2: An enlarged oblique aerial perspective view of a typical woven fabric of the first embodiment of the invention.
Figure 3: An explanatory diagram illustrating the method of manufacture of the fiber mat of the first embodiment of the invention.
Figure 4: An enlarged oblique aerial perspective view of a typical sheet of the second embodiment of the invention.
Figure 5: A cross sectional view of the board of the third embodiment of the invention.
Figure 6: An exploded perspective view of the third embodiment of the invention.
Figure 7: An explanatory diagram illustrating a typical set of holes made in a brace.
Figure 8-(a): An explanatory diagram showing a hole free from deformation.

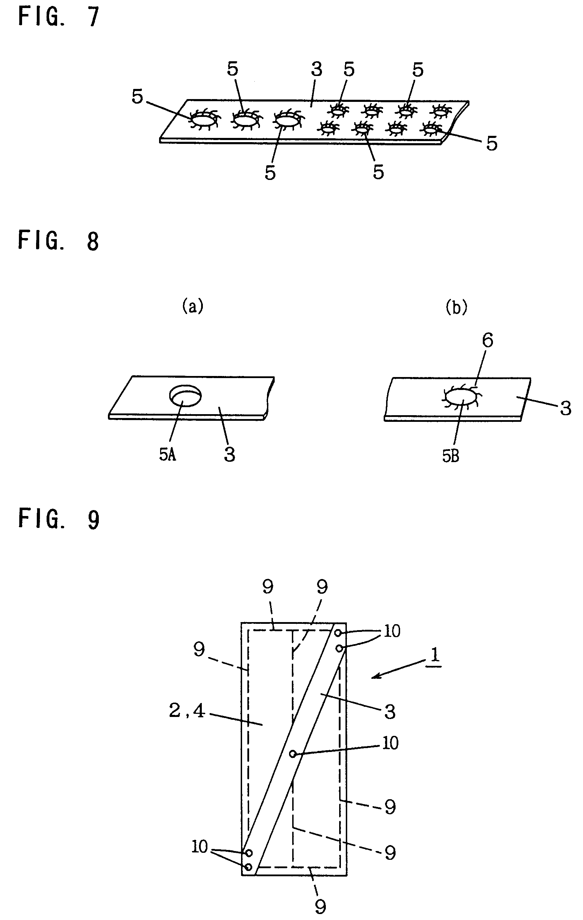

Figure 8-(b): An explanatory diagram showing a hole with burrs or other protuberances around its perimeter.
Figure 9: An explanatory diagram illustrating work typical of the third embodiment of the invention.

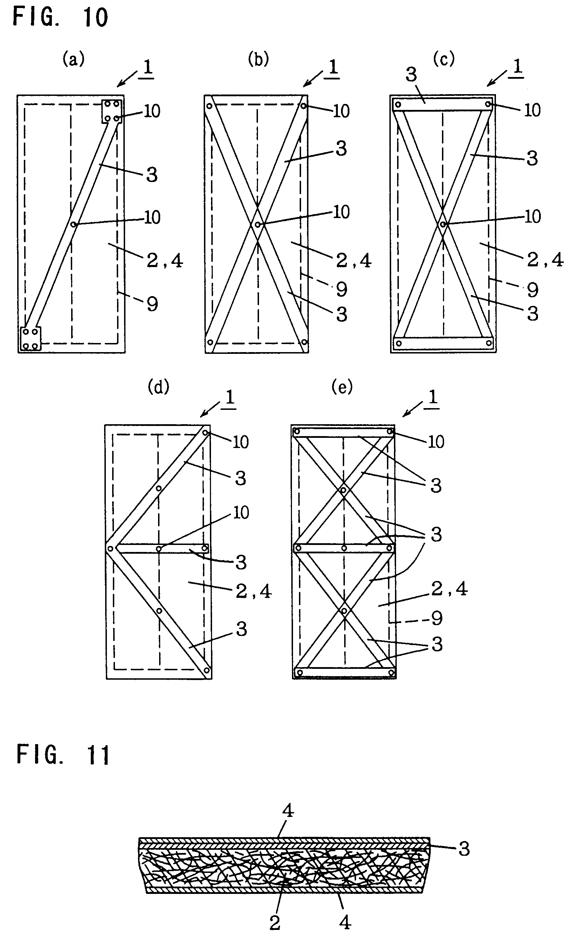

Figure 10-(a) to 10-(e): Explanatory diagrams illustrating some of the different patterns of bracing employed.

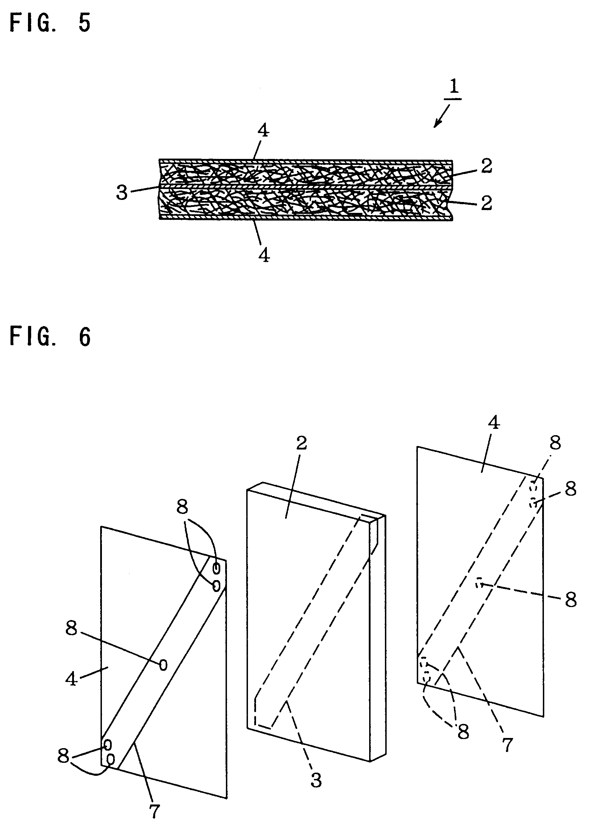

Figure 11: A cross sectional view of the board of the fourth embodiment of the invention (comparable to the board shown in Figure 5 above).

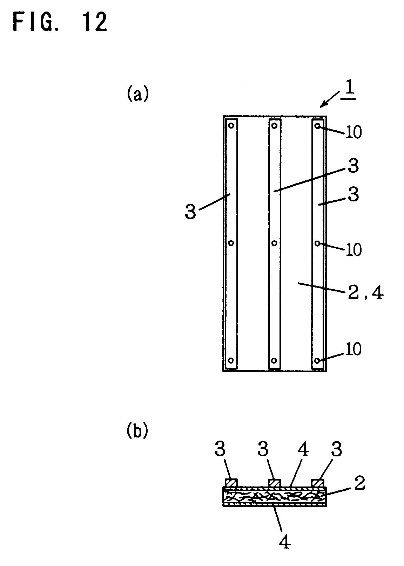

Figure 12-(a): A front view of a board fitted with a plurality of braces laid lengthwise at intervals along the board and more or less parallel to each other.
Figure 12-(b): A side view of the braced board illustrated in Figure 12-(a) above.

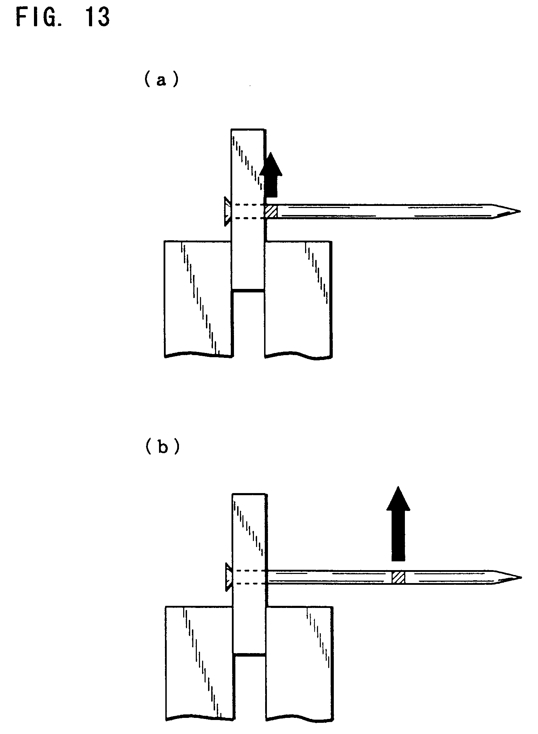

Figure 13-(a): Illustrates a method (method A) of measuring the nail holding load of one of the boards of the invention.
Figure 13-(b): Illustrates another method (method B) of measuring the nail holding load of one of the boards of the invention.

### DETAILED DESCRIPTION OF THE PREFERRED EMBODIMENT

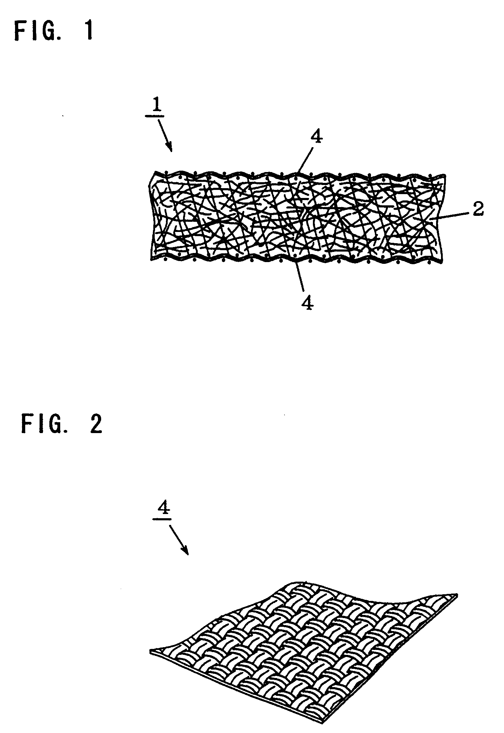

The following is detailed description of the preferred embodiment of the present invention by reference to the drawings. Figure 1 illustrates the board 1 of the first embodiment of the invention. Said board 1 is formed by spreading woven fabric made up of hemp cloth 4 woven in a crosswise pattern from hemp fiber as shown in Figure 2 over both sides of a palm fiber mat 2 incorporating if necessary a mixture of natural vegetable fibers such as hemp and bamboo fibers, by impregnating said material with curable resin and by compression molding it to the required shape.

Oil palm fiber, which is obtained by breaking down the fibrous sections of the empty fruit bunches of the oil palm into their constituent fibers, is ideal for the creation of the aforementioned fiber mat 2. In order to make said fiber mat 2, the palm fibers are first subjected to needle punching to increase their peel strength by forming them into a more tightly knit nonwoven fabric or three-dimensional network structure. The fiber mat 2 is then pressed or heat pressed if necessary to pack the fibers more tightly. A fiber mat 2 is, moreover, most easy to work with in thicknesses of about 5 to 20mm. It goes without saying, however, that the thickness of a mat should be determined in the final analysis by reference to the purpose for which the mat is needed, the weights of fiber mats typically ranging from about 0.5 to 5kg/m². Fiber mats can equally be laid one on top of another for use. The fibers should also be washed if necessary both before and after splitting in order to remove the oil and accompanying odors. Individual oil palm fibers are highly rigid, measure about 100 to 600µm in diameter and are about 5 to 30cm in length and thus, by splitting them into individual fibers, a high degree of intertwining can be anticipated. Oil from oil palm is easily obtained by squeezing the fruit of the palm. The remaining bunches of empty fruit have no other use, however, and are commonly just thrown away. They are for this reason easy and cheap to obtain. Oil palm fibers are also easier than most palm fibers to break down into its constituent fibers with the result that little energy need be expended on the manufacturing process and this once again helps reduce the cost of production. Oil palm fibers also give rise to less dust than other palm fibers with the result that handling this type of fiber does not damage the environment, which is also to be preferred.

The aforementioned palm fibers can also be mixed if necessary with other natural vegetable fibers such as the constituent fibers of hemp or young bamboo, or else of pineapple plants or sugar cane.

The hemp cloth 4 can be woven in the style of a plain fabric, a twill, a stain weave, a basket weave (either regular or irregular) or indeed any of a number of other styles, the most desirable of these being the plain or twill style. In the case of knitted hemp fabric, the plain and rib stitch styles are commonly chosen. The sort of yarn to be preferred in this case is typically a jute with a yarn count (i.e. the number of kilograms mass for 29,029m of yarn) from 7.5 to 40. A desirable weight is about 100 to 1,200g/m². A preferable weight is about 100 to 1000g/m² and the more preferable weight is about 100 to 600g/m². At weights of less than 100g/m², the benefits of strength and water resistance are to some extent lost, whereas at weights in excess of 1,200g/m², the concomitant improvement in strength and water resistance is disproportionately small while the increase in weight makes the material unnecessarily heavy and difficult to handle and such excessive weight should be avoided. The knitted density is determined by reference both to the type of weave selected and the yarn count.

A number of curable resins are suitable for use with the present invention. Starting with the thermosetting resins, the suitable resins include phenol resins, amino resins and diallyl phthalate (DAP resin). The range of phenol resins includes novolac resin (acid catalyst, phenol excess), resol resin (basic catalyst, formaldehyde excess), copolymerized phenol-melamine resin, copolymerized phenol-melamine-urea resin and a number of modified phenol resins such as alkylphenol modified phenol resin and rubber modified phenol resin. The amino resins include urea resin, melamine resin, copolymerized urea-melamine resin, benzoguanamine resin and acetoguanamine resin. The list of reactive resins (room temperature setting resins) that can be used includes furan resin, alkyd resin, unsaturated polyester resin, urethane resin, epoxy resin, modified silicone resin and silicone resin. Curable resins of the types outlined above are to be preferred for use as fiber mat sizing agents or binders primarily because of their dimensional precision, durability and strength. At the same time, despite being somewhat less desirable in terms of their physical properties, other substances that can sometimes be used as binders include the acryl and styrene based thermoplastic resins (particularly aqueous dispersants) and natural or synthetic rubber latexes such as SBR. The curable resins used in the present invention should thus be understood in principle to include this latter range of substances as well. Of all the above curable resins, the thermosetting resins are to be preferred for the benefits they offer in terms of cure time and productivity. This is particularly true of the phenol and amino resins. The curable resins of the invention can be supplemented by the addition of a variety of agents including plasticizing agents, filling agents, reinforcing agents, sag prevention agents, coloring agents, anti-ageing agents, adhesion acceleration agents, curing agent and characteristic regulation agents. Substances such as "konnyaku" (devil's tongue starch paste), wheat flour and starch can also be added to assist the adhesion process.

The thickness of the board 1 of the present invention should preferably be about 3 to 25mm, a more preferable thickness being somewhere about 9 to 20mm. The preferred range of densities for the board 1 of the invention is about 0.2 to 1g/cm³, about 0.3 to 0.7g/cm³ being more preferable, and about 0.4 to 0.6g/cm³ being much more preferable. As for weight, a board 1 of 9mm in thickness and a density of 0.2g/cm³ will weigh 1.8kg/m² whereas a similar board with a density of 1kg/m³ will weigh 9kg/m².

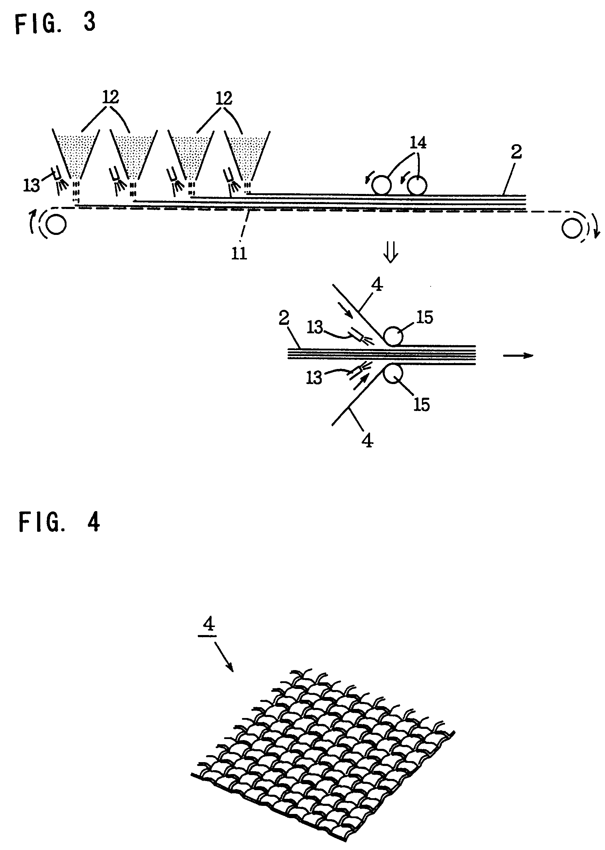

The method of manufacture of the aforementioned board 1 is as follows. First, split palm fibers are mixed if necessary with natural vegetable fibers such as hemp and bamboo fiber to form a fiber mat 2. The mechanism used for this process consists, as shown in Figure 3, of a plurality of hoppers 12, which are positioned in line above a belt conveyor 11, said line extending in the direction of travel of said belt 11.

Each hopper 12 has a spray gun 13 positioned close to its mouth and oriented in the direction of its mouth. Downstream from the hoppers 12, a plurality of hot pressure assembly rollers 14 are positioned across the line of travel of the belt conveyor 11. Each hopper contains a suitable mix of palm, flax, bamboo and other fibers. The spray guns 13,13... are filled with curable resin under pressure. When the belt conveyor 11 is in motion, each hopper 12 releases its load of mixed fibers onto the moving belt 11. At the same time, the spray guns 13 spray curable resin onto the mixed fibers on the belt 11. The contents of the first hopper 12 form the first or bottom layer of mixed fibers, the contents of the second hopper 12 are laid on top of the first layer to form the second layer of mixed fibers, and the contents of each subsequent hopper are laid over each preceding layer in the same way until the requisite number of layers has been formed. The multiple layers of mixed fibers then pass under the heated compression rollers 14 where pressure is applied to form the fiber mat 2. If there is no need for a mix of different fibers, the hoppers 12 can all, of course, be filled with the same palm fibers, for example. It would be equally acceptable under circumstances of this sort to use only one hopper 12 in combination with a single spray gun 13. Again, by varying the characteristics of the fiber (mixing ratio, fiber thickness, fiber length) introduced into the first, second and subsequent hoppers 12,12..., it is also possible to vary the characteristics of the various layers which go to make up the finished fiber mat 2. The combination of a central layer of thick palm fibers with a layer of thin palm fibers on either side is particularly effective since this serves to increase the contact density of the fibers on the outer surfaces of the finished fiber mat 2, a factor which contributes in turn to the formation of a high quality board 1 at the next stage of the process. A hemp cloth 4,4 is then fitted to either side of the fiber mat 2, curable resin is added and the resultant material is formed as required by thermal compression.

A similar mechanism to the one outlined above can be used as shown in Figure 3 for this part of the process. In this case, the completed fiber mat 2 is transported onwards by the belt conveyor 11, a layer of hemp cloth 4,4 is applied to either side of the fiber mat 2, spray guns 13 are positioned at the points of initial contact between the hemp cloth 4 and the fiber mat 2, and the completed material finally passes between two opposing heated compression rollers 15,15 positioned further downstream. The spray guns 13,13... are filled in advance with curable resin under pressure. When the belt conveyor 11 is in motion, each spray gun 13 sprays curable resin onto the fiber mat 2 which would then pass between the heated compression rollers 15,15 where the finished board 1 is formed.

In addition to manufacture by the continuous formation process outlined above, each layer can equally be formed individually in a series of consecutive processes. In this case, the completed fiber mat 2 is treated with curable resin and then formed to the required shape. The completed mat is then coated with another layer of curable resin onto which hemp cloth 4,4 is adhered. The material is then pressed by a compression molding machine through a thermal press to complete the compression formation process.

In the methods of manufacture outlined above, a spray gun 13 is used to spray curable resin onto the material. It is equally acceptable, however, for curable resin to be applied by dipping the fiber into said resin.

Furthermore, in addition to its use as a sizing agent or binder for the fiber mat 2, the curable resin also functions as a stiffening agent for the hemp cloth itself and as a bonding agent to glue the hemp cloth 4 to the fiber mat 2. The curable resin also functions as a bonding agent for the board as a whole and as a sizing agent to provide the necessary overall rigidity. Wherever possible, it is always preferable if the curable resin used in the formation of the fiber mat is the same as the curable resin used to bond the hemp cloth 4,4 to said fiber mat 2. Since the amount of curable resin used depends in part on the characteristics required of the completed board 1 to which it is applied, it is difficult to be specific about how much should be used.

As a rule of thumb, however, taking the combined weight of the fiber mat 2 and the hemp cloth 4 as our yardstick, about 5 to 100% by weight is preferable, about 5 to 50% is more preferable, and about 10 to 30% is much more preferable.

Moreover, by varying the amount of curable resin applied to the hemp cloth, it is possible to vary the strength of the finished board 1. In other words, by increasing the amount of curable resin applied to the hemp cloth, it is possible to increase the strength of the finished board 1. For example, the amount of curable resin applied to the hemp cloth could be about 5 to 500% by weight, and about 5 and 150% is preferable. If the amount of curable resin used is less than 5% by weight, this tends to impair the lamination function of the hemp cloth while more than 500% by weight tends to make the finished material unduly heavy.

Thus, in the board 1 of the first embodiment of the invention, the fiber mat 2 is made of palm fibers mixed with hemp, bamboo and other natural vegetable fibers. The hemp cloth 4 is also made of hemp fibers. These all have rougher surfaces than manmade fibers and this enables them to form much stronger bonds with each other than is possible with manmade fibers. They are also able to form extremely strong bonds with curable resins by virtue of the so-called anchor effect. Moreover, since fibers such as hemp have only narrow diameters of about 5 to 30µm compared with palm fibers, which are about 100 to 600µm in diameter, the smaller diameter natural vegetable fibers tend to become entangled with the much thicker palm fibers at the points where the thicker fibers cross and, in so doing, they increase the strength of the bond between the palm fibers themselves.

Again, fibers such as bamboo tend to be flat and rigid and, when mixed with palm fibers, they serve to improve characteristics of the finished mat such as its strength.

Thus, when used to form the windbreak layer of a house wall, the great strength of the board 1 not only serves to support and stabilize the heat insulating layer, it also serves to reinforce other structural sections in the vicinity of the windbreak layer. The board 1 is thus basically strong as explained above and, by adjusting the board's other characteristics such as its density and the amount of curable resin used in its manufacture, it is also possible to give it the same bending strength as, or even greater bending strength than, a medium density fiber board of type 150 to 300 (the number represents the value of bending strength measured in kg/cm²). At the same time, the board 1 can also be given moisture permeability characteristics either equivalent to or closely approximating those of sheathing board. The board 1 can equally be given the same bending strength as a sheathing board, equivalent to that of a medium density fiber board of type 50, and a moisture permeability characteristic equal to or greater than that of a sheathing board. Of these two characteristics, bending strengths are typically in a range of about 300 to 5,000N/m², and 400 to 4,000N/m² is preferable and 500 to 3,000N/m² being more preferable. Moisture permeability is typically in a range of about 0.1 to 10µg/(m².s.Pa), 0.2 to 8µg/(m².s.Pa) being preferable and 0.5 to 5µg/(m².s.Pa) being more preferable.

Given the comparatively large diameter of palm fibers of about 100 to 600µm and taking into consideration that the density of the fiber filling will also have a bearing on the final outcome, palm fiber mats 2 tend by and large to form such that fairly large interstices about of 100µm to 5mm are left between the individual fibers in the mat. The moisture permeability of this type of fiber mat 2 is thus extremely good. Moreover, since the stitches of hemp cloth 4 allow air to pass through, they also provide excellent moisture permeability. Thus, by varying inputs such as the amount of curable resin used, the amount of fiber mat 2 and hemp cloth 4 used and the compression ratio applied at the forming stage, the board 1 of the present invention, which is made with the help of the materials described above, can be provided with a wide range of different strength and moisture permeability characteristics. The board 1 of the present invention thus makes an outstanding windbreak layer.

Again, since hemp cloth 4 is made from hemp fibers, which exhibit high tensile strength and a high modulus of tensile elasticity, the hemp cloth 4 itself exhibits this same high level of tensile strength and the same high modulus of tensile elasticity. The hemp cloth 4 of the invention also forms a strong bond with the fiber mat 2 to which it is glued by means of curable resin, thereby increasing the strength of the finished board 1. In other words, by applying hemp cloth 4 to both surfaces of a fiber mat, it is possible to create a sandwich structure and, in so doing, to increase both the bending strength and the modulus of bending elasticity of the finished board 1. Furthermore, since hemp cloth 4 exhibits only a minimal change in size when it absorbs water or moisture, when it is applied to both sides of a fiber mat 2, it offers the dual advantage both of limiting the change in size during water or moisture absorption of the finished board or other molded material and also of limiting any concomitant loss of strength. The board 1 is thus able to function as a structural facing while at the same time reinforcing the structural sections in the vicinity of the windbreak layer.

In the first embodiment of the invention outlined above, hemp cloth 4 was used in the form of a woven fabric. However, natural fibers such as hemp can also be formed into nonwoven fabrics 4. Nonwoven fabrics 4 function as retention materials for curable resin and, by applying such nonwoven fabrics to both sides of a fiber mat 2, it is possible to create a sandwich structure of a sort which will increase both the bending strength and the modulus of bending elasticity of the finished board 1. On the other hand, however, since both the strength and the water resistance of nonwoven fabrics 4 fall short of those characteristics in woven fabrics, woven fabrics are generally to be preferred in this respect. The natural fibers used to form nonwoven fabrics 4 of the type described above can also be mixed if so required with synthetic fibers such as nylon, polypropylene or polyester.

The interstices between the fibers of a palm fiber mat 2 are large with the result that, when the mat is sprayed or otherwise impregnated with curable resin, the resin tends to spread itself evenly between the fibers throughout the mat, thereby producing an even distribution of strength in the finished board 1.

Figure 4 illustrates the second embodiment of the invention. Where hemp cloth 4 was used as a woven fabric in the first embodiment of the invention, this is replaced in the second embodiment by a sheet 4 made by knitting (or weaving) in a crosswise pattern thin belt shaped strips cut from bamboo, for example. Strips of paper can also be glued with resin to the surface of the said sheet 4 to provide it with a better surface, an extremely high level of tensile strength and a similarly high modulus of tensile elasticity. Ideally, the strips of bamboo should be about 0.2 to 1mm thick and about 5 to 30mm wide and they should be woven and then glued together firmly. This type of sheet can also be used in conjunction with a sheet of hemp cloth. The finished board 1 can be made by the same method as that outlined above in connection with the first embodiment of the invention.

Points to note in connection with the curable resin are also the same as those outlined with respect to the first embodiment of the invention above.

The board 1 of the second embodiment of the invention offers the same functions and effect as the board 1 of the first embodiment above. The use of bamboo also enables the board 1 of the second embodiment to be made particularly strong.

From the design point of view, the surface of the board 1 can also be finished in a variety of different and extremely attractive ways. Another desirable feature of this type of board is its high degree of resistance to water and wet rot.

Figure 5 illustrates the board 1 of the third embodiment of the invention. This board 1 is formed to the prescribed thickness by reinforcing the interior of a fiber mat 2 with brace 3 and by facing both sides of said mat 2 with woven or nonwoven fabrics or with sheets 4 of some sort. The addition of woven or nonwoven fabrics or of sheets 4 can be dispensed with in cases in which finished strength is not of overriding importance.

As shown in Figure 5 and Figure 6, the brace 3 referred to above is made from wood based materials such as plain wood or plywood or else from wood fiber or carbon fiber materials formed into the shape of a tie plate of the prescribed thickness and width. Said brace 3 is incorporated at the forming stage into the aforementioned fiber mat 2 either by laying it on the surface of one of the filling layers or in between said filling layers or else by incorporating it into the middle of a multi-layered fiber structure such that it forms an integral part of the finished fiber mat 2. Said brace 3 can also be bonded to the surface of the finished board 1 or else jointed to said board 1 mechanically.

The body of the tie plate shaped brace 3 referred to above may also be pierced with an unspecified number of holes 5 of any size, shape and spacing as shown in Figure 7. Not only do these holes 5 help strengthen the bond between the brace 3 and the fiber mat 2, they also prevent the brace 3 from impairing the moisture permeability of the fiber mat 2, thereby contributing to the production of a finished board 1 with excellent moisture permeability and strength.

The aforementioned holes 5 can be cut cleanly through the brace 3 as shown in Figure 8-(a) (hole 5A) or else they can be gouged roughly with a needle shaped instrument to leave an unevenly shaped, burred hole of the kind shown in Figure 8-(b) (hole 5B). This second type of hole 5B is to be preferred since the roughened edges of the hole 6 help strengthen the bond between fiber mat 2 and brace 3.

If the water resistance of the woven or nonwoven fabric or of the sheets 4 used to face the finished board 1 need to be increased for any reason, they can be coated with a waterproofing agent such as silicone.

As shown in Figure 6, the surface of the woven or nonwoven fabric or of the sheets 4 used to face the finished board 1 is marked in the shape and position of the brace 3 in the fiber mat 2 beneath. The positions 8 in which bolts, nails or other metal ties can be driven through the brace 3 to secure the board 1 to the posts or other structural parts of the house wall are also marked on the surface of the board 1.

This significantly simplifies the work of securing the brace 3 inside finished boards 1 to structural parts of the house wall.

The aforementioned boards 1 are manufactured one by one. First, palm, hemp or another suitable fiber is split into its constituent parts and fibers with a diameter about 5 to 600µm and about 5 to 30cm in length are selected. Palm fiber tends also to include fibers with bigger cross sectional diameters and lengths somewhat shorter than those recommended above but these can still be used without further selection. Palm fiber tends as a rule to be about 5 to 30cm in length and does not as such require machining. On the other hand, hemp fiber tends to be considerably longer and needs therefore to be cut to length before use.

Next, curable resin is added to these natural vegetable fibers and mixed to ensure a more or less even distribution of resin over the surface of the fibers.

Next, if necessary, a woven or nonwoven fabric or a sheet 4 is laid in the bottom of a mold (not shown in the drawings), half the aforementioned fiber mixture is poured evenly over the top and the aforementioned brace 3 is fitted into position. The other half of the fiber mixture is then poured evenly over the top and, if necessary, another piece of woven or nonwoven fabric or a sheet is laid on the top. The mixture is then squeezed in a heat press to produce a finished board 1 of the required thickness and density.

When fitting a board 1 manufactured in the manner outlined above, first fit it in position where a bearing wall is to be built and secure it to the structural posts by driving nails, screws or some other sort of metal tie 9 through the edges of the board 1 into the posts behind as shown in Figure 9. At the same time or else immediately before or after carrying out this work, the appropriate bolts, large nails or other metal ties 10 are used to secure the brace 3 firmly into position against the structural posts as shown in Figure 9.

In cases in which the brace 3 is made of, for example, a fairly thick metal sheet, the user may reasonably envisage having some difficulty securing the brace 3 in position using the metal nails or ties 10 referred to above. In such case, holes should be made in the brace 3 in advance in line with the retaining position markings 8 (see Figure 6) made on the outside of the board 1. Alternatively, if the work is to be carried out on site, the board should be lined up using the retaining position markings 8 as a guide and a drill used to make the necessary holes in the brace 3 to allow the metal retaining fittings 10 to be inserted if necessary.

The pattern of brace 3 need not be confined to the sort of pattern described above in connection with the third embodiment of the invention and alternative patterns such as those illustrated in Figures 10-(a) to 10-(e) and Figure 12 can equally be selected if necessary to meet the particular requirements of the location in which the boards 1 in question are to be fitted. In the case of boards 1 fitted with brace 3 in the sort of pattern illustrated in Figure 12, the spaces in between the braces 3,3... function as a ventilation layer once the boards 1 are in place.

In the embodiments of the invention described above, we have explained how the fiber mat 2 can be formed by pouring split natural fibers into the mold without further processing. The fibers can, however, be woven into fiber cloths which are then impregnated with curable resin and laid one on top of the other in layers with the brace 3 being positioned at some point in between. Boards 1 manufactured in this way have great physical strength without losing any of their permeability to moisture.

Figure 11 illustrates the fourth embodiment of the invention. Unlike the third embodiment of the invention outlined above, the brace 3 is in this case laid along one side of the fiber mat 2 of which it forms an integral part. In all other respects, the structure of the fourth embodiment of the invention is identical to that of the third embodiment. It also fulfills the same range of functions.

In the fourth embodiment of the invention, the brace 3 is laid on one face of the fiber mat 2. Thus, by fitting the board to the wall posts with the side of the mat 2 on which the brace 3 is located closest to said posts, it is possible to position the brace 3 no more than the thickness of the intervening woven or nonwoven fabric or sheet 4 away from the structure posts and this makes the stabilizing support provided by the brace 3 all the more secure.

In the fourth embodiment of the invention outlined above, we described the way in which the brace 3 could be incorporated into the fiber mat 2 as an integral part of the formation of said mat 2. Another way of producing the same sort of result would be to first form a fiber mat 2 with a woven or nonwoven fabric or a sheet 4 on one side only. The brace 3 could then be glued to the uncovered side of the fiber mat 2 with curable resin or else nailed on to create a single unit.

The final piece of woven or nonwoven fabric or sheet 4 could then be glued onto the outside of the brace 3 to complete the board 1. This approach could equally be used to manufacture a plurality of fiber mats 2 of a specified size.

These could be fitted with braces 3 in the required pattern or patterns on site, thereby dispensing with the need to prepare boards 1 with a variety of different brace patterns in advance. The adoption of this approach would also significantly simplify inventory control. In the third and fourth embodiments of the invention described above, the brace 3 takes the shape of a flat board. However, the brace 3 could equally be shaped in the form of a wire or rod in which case there would be less risk of the brace 3 impairing any moisture permeability characteristics the fiber mat 2 may have. Moreover, if the surface of the brace 3 is given an uneven finish, this can also enhance the strength of the bond formed between the brace 3 and the fiber mat 2.

Brace 3 can also be made by breaking wood based materials, metals, plastics, glass fiber or carbon fiber down into their constituent fibers and then weaving them together into flat strips. Using this approach, it is possible to obtain moisture permeability and an adequate bond with the fiber mat 2 base without having to make holes 5 in the brace 3.

In the boards 1 of the third and fourth embodiments of the invention, the brace 3 also serves as a reinforcement. In this case, since the brace 3 forms an integral part of the finished board 1, brace 3 is automatically fitted whenever a board 1 is fitted. Moreover, since the brace 3 does not intrude on the heat insulating layer, there is no reduction in the space made available for this layer. With the help of this additional feature, an old familiar problem is quite simply resolved.

In other words, in cases in which heat insulating material is introduced into the wall cavities in the type of wooden houses in which wooden braces have traditionally been used, it has normally been necessary to reduce the thickness of the insulating material in the vicinity of the braces in order to make room for said braces and this has not infrequently resulted in the development of gaps in the insulation around the braces. Furthermore, the heat insulation function has not always been the only area of impairment. In some cases the adoption of this type of structure has led to the formation of condensation in the wall cavities and this has inevitably increased the risk of rot developing in the wooden structural materials.

Again, the use of metal braces in steel framed structures tends to make the walls unduly thick while at the same time making the work of inserting heat insulating material into the wall cavities complicated and unnecessarily troublesome.

Again, although the plywood and other structural materials used in a typical 2 x 4 timber-framed dwelling unit facilitate the achievement of the strongest possible allowable stress factor for a wall of fully 2.5, their moisture permeability is poor and in the event that the quality of the interior damp proofing course is also poor there is a risk that condensation will form inside the wall cavities and that this will quickly lead to the development of wet rot.

It is for this reason desirable that structural facings used in the construction of bearing walls should be given heat insulating properties of their own and, in cases in which they are used in the construction of outside walls, that they should be water proof and water resistant, that they should be at least as permeable to moisture as the heat insulating materials incorporated into the wall cavities, that they should be stronger than the required allowable stress factor for a wall without the addition of diagonal or other bracing, and that they should neither interfere with the fitting of heat insulating materials nor with the construction of an outside wall ventilation layer.

By using the boards 1 described above in connection with the third and fourth embodiments of the present invention, it is possible to resolve all these problems at a stroke.

In the embodiments of the invention described above, the palm fiber used to make the fiber mat 2 was mixed if necessary with other natural vegetable fibers such as hemp or bamboo fiber. However, this does not preclude the fiber mat 2 being made from palm fiber alone.

In the embodiments of the invention described above, we discussed fiber mats 2 with woven or nonwoven fabrics or sheets 4 fitted on both sides. For the purpose of the present invention, however, said woven or nonwoven fabric or sheet 4 might equally be fitted to one side of said fiber mat 2 only, or else incorporated into the interior of the fiber mat 2 or else fitted to one or both sides of the fiber mat 2 and incorporated into its interior. Again, in the case of boards in which the woven or nonwoven fabric or the sheet 4 is incorporated into the inside of the fiber mat 2, this should also be understood to include cases in which several layers of woven or nonwoven fabric or sheet 4 are interspersed alternately with the palm or other fiber layers of the fiber mat 2. In cases in which woven or nonwoven fabric or sheet 4 are incorporated into the interior of a fiber mat 2 and then subjected to a process such as needle punching, the fibers in the woven or nonwoven fabrics or the sheets tend to become well intertwined with each other and this enhances the peel strength, the bending strength and the modulus of bending elasticity of the finished board 1.

When a woven or nonwoven fabric or a sheet 4 is introduced into the inside of a fiber mat 2, there is a concomitant increase in the tensile strength, the modulus of tensile elasticity, the shearing strength, the modulus of transverse elasticity, the planar compressive strength and the planar modulus of compressive elasticity of the finished board 1.

This makes the finished board 1 suitable for use as a structural facing and for the reinforcement of structural sections of a wall in the vicinity of the windbreak layer.

In the first embodiment of the invention described above, a single woven fabric 4 made from hemp yarn was used and in the second embodiment of the invention a single sheet 4 knitted from thin strips of bamboo was used. If more than one woven or nonwoven fabric 4 or more than one sheet 4 is used, however, they can be combined in whatever way appears most appropriate.

In the embodiments of the invention described above, we have dealt only with rectangular boards of uniform thickness. It is equally acceptable, however, at the compression molding stage to use variously shaped molds to make boards of different shapes. In this case the finished boards offer exactly the same functions and benefits as the boards already described.

We will now describe a number of boards which we made for the purpose of experiment and comparison.

### 〈Experimental board No.1〉

Showa Kobunshi phenol resin Phenol BRE174, prepared to a solid weight concentration of 20wt%, was sprayed onto already split oil palm fibers (mean diameter: approx. 370µm, length: approx. 110mm, distance from end to end in curled form: approx. 40mm) in a solid weight ratio of 10wt% relative to said oil palm fibers. Oil palm fibers with a unit weight of 3.47kg/m² and oil palm fibers impregnated with phenol resin in a solid weight ratio of 10wt% (unit weight: 0.347kg/m²) relative to said oil palm fibers were then pressed together at room temperature with a compressive force of 800Pa for 30 minutes. The oil palm fiber mat was then dried in an oven at 80°C for one hour to remove the moisture. Two sheets of jute cloth with unit weights of 0.32kg/m² were then sprayed with phenol resin with a solid weight concentration of 20wt% and in a solid weight ratio of 10wt% relative to said jute cloth. Next, the material was put together in layers with the oil palm fiber mat in the middle and a layer of jute cloth on either side and pressed by a compression molding machine at 170°C for 10 minutes to create a board 11.6mm thick with a density of 0.39g/cm³. The characteristics of the finished board included a bending strength of 550N/cm², a wet bending strength of 180N/cm² (retention ratio: 32.7%), a coefficient of moisture permeability (the amount of water vapor per unit of vapor pressure to permeate a single unit of area over a single unit of time) of 3.18µg/(m².s.Pa) at relative humidity of 90% at 40°C, a hygroscopic longitudinal swelling rate of 0.2% after immersion in water for 24 hours, and a nail holding load (method A) of 183N. Bending strength was measured in accordance with the JIS A 5906 medium density fiber board measurement method. The hygroscopic longitudinal swelling rate was measured in accordance with the JIS A 5905 insulation fiber board measurement method. The coefficient of moisture permeability was measured by reference to the JIS Z 0208 method for the moisture permeability testing of water proof packaging materials. In practice, an aluminum tape was attached to a moisture permeable cap to enable the moisture permeability of the 11.6mm board to be measured.

The nail holding load was measured as shown in Figure 13-(a) by first hammering a round steel N90 nail into the finished board. The board was then secured in position and the nail was pulled at the precise point where it protruded from the other side of the board in a direction perpendicular to the nail's longitudinal axis and the maximum load measured (hereinafter referred to as "method A"). In the case of the jute cloth, the cloth was woven in plain style with 39 strands of yarn to every 10cm of weave both lengthwise and crosswise and a unit weight of 320g/m² (the same should be understood to apply to all the other experimental boards discussed below).

### 〈Comparison board No.1〉

Showa Kobunshi phenol resin Phenol BRE174, prepared to a solid weight concentration of 20wt%, was sprayed onto half-broken oil palm fibers (mean diameter: approx. 370µm, length: approx. 110mm, distance from end to end in curled form: approx. 40mm) in a solid weight ratio of 10wt% of said oil palm fibers. Oil palm fibers with a unit weight of 4.11kg/m² and oil palm fibers impregnated with phenol resin in a solid weight ratio of 10wt% (unit weight: 0.411kg/m²) of said oil palm fibers were then pressed together at room temperature with a compressive force of 800Pa for 30 minutes.

The oil palm fiber mat was then dried in an oven at 80°C for one hour to remove the moisture content. Next, the oil palm fiber mat was pressed by a compression molding machine at 170°C for 10 minutes to create a board 11.6mm thick with a density of 0.39g/cm³. The characteristics of the finished board included a bending strength of 470N/cm², a wet bending strength of 110N/cm² (retention ratio: 23.4%), a coefficient of moisture permeability of 3.04µg/(m².s.Pa) at relative humidity of 90% at 40°C, a hygroscopic longitudinal swelling rate of 1.2%, and a nail holding load (method A) of 168N.

Table 1 compares experimental board No.1 with comparison board No.1 in terms of their composition, the unit weight of their constituent oil palm fiber and jute cloth per square meter, the quantity of phenol resin applied, and their overall thickness and density. Table 2 compares experimental board No.1 with comparison board No.1 in terms of their composition, their bending strength, their wet bending strength, their hygroscopic longitudinal swelling characteristics, their coefficient of moisture permeability and their nail holding load (method A). As shown in Table 2, a board created by heat pressing a palm fiber mat together with a layer of jute cloth on either side is compared with a similar palm fiber mat made without the jute cloth. The results of the comparison show the board's hygroscopic longitudinal swelling rate to be smaller as well as its wet bending strength. On the other hand, the board's bending strength and its nail holding load (method A) were both found to increase.

### 〈Experimental board No.2〉

Showa Kobunshi phenol resin Phenol BRE174, prepared to a solid weight concentration ratio of 20wt%, was sprayed onto half-broken oil palm fibers (mean diameter: approx. 370µm, length: approx. 110mm, distance from end to end in curled form: approx. 40mm) in a solid weight ratio of 10wt% of said oil palm fibers. Oil palm fibers with a unit weight of 3.47kg/m² and oil palm fibers impregnated with phenol resin in a solid weight ratio of 10wt% (unit weight: 0.347kg/m²) of said oil palm fibers were then pressed together at room temperature with a compressive force of 800Pa for 30 minutes.

The oil palm fiber mat was then dried in an oven at 80°C for one hour to remove the moisture. Two sheets of jute cloth with unit weights of 0.32kg/m² were then sprayed with phenol resin with a solid weight concentration of 20wt% in a solid weight ratio of 16wt% to said jute cloth. Next, the material was put together in layers with the oil palm fiber mat in the middle and a layer of jute cloth on either side and pressed by a compression molding machine at 170°C for 10 minutes to create a board 11.6mm thick with a density of 0.39g/cm³. The characteristics of the finished board included a bending strength of 660N/cm², a wet bending strength of 290N/cm², a coefficient of moisture permeability of 3.26µg/(m².s.Pa) at relative humidity of 90% at 40°C, a hygroscopic longitudinal swelling rate of 0.4% after immersion in water for 24 hours, and a nail holding load (method A) of 197N.

### 〈Experimental board No.3〉

Showa Kobunshi phenol resin Phenol BRE174, prepared to a solid weight concentration ratio of 20wt%, was sprayed onto half-broken oil palm fibers (mean diameter: approx. 370µm, length: approx. 110mm, distance from end to end in curled form: approx. 40mm) in a solid weight ratio of 10wt% of said oil palm fibers. Oil palm fibers with a unit weight of 3.47kg/m² and oil palm fibers impregnated with phenol resin in a solid weight ratio of 10wt% (unit weight: 0.347kg/m²) of said oil palm fibers were then pressed together at room temperature with a compressive force of 800Pa for 30 minutes.

The oil palm fiber mat was then dried in an oven at 80°C for one hour to remove the moisture. Two sheets of jute cloth with unit weights of 0.32kg/m² were then sprayed with phenol resin with a solid weight concentration of 20wt% in a solid weight ratio of 50wt% to said jute cloth. Next, the material was put together in layers with the oil palm fiber mat in the middle and a layer of jute cloth on either side and pressed by a compression molding machine at 170°C for 10 minutes to create a board 11.6mm thick with a density of 0.41g/cm³. The characteristics of the finished board included a bending strength of 860N/cm², a wet bending strength of 350N/cm², a coefficient of moisture permeability of 3.20µg/(m².s.Pa) at relative humidity of 90% at 40°C, a hygroscopic longitudinal swelling rate of 0.3% after immersion in water for 24 hours, and a nail holding load (method A) of 203N.

### 〈Comparison board No.2〉

The physical characteristics of Daiken's Asedasu D sheathing board, which can be purchased from most building materials dealers, were evaluated in the same way as experimental boards No. 1, No.2 and No.3 described above. The results of these tests indicated a sheathing board bending strength of 333N/cm², a wet bending strength of 89N/cm², a coefficient of moisture permeability of 2.40µg/(m².s.Pa) at relative humidity of 90% at 40°C, a hygroscopic longitudinal swelling rate of 0.5%, and a nail holding load (method A) of 96N.

Table 3 compares the first, second and third experimental boards in terms of their composition, the unit weight of their constituent oil palm fiber and jute cloth per square meter, the quantity of phenol resin applied, and their overall thickness and density. The table also includes comparative figures for the thickness and density of the sheathing board which constitutes comparison board No.2.

Table 4 compares the first, second and third experimental boards and the sheathing board of comparison board No.2 in terms of their composition, their bending strength, their wet bending strength, their hygroscopic longitudinal swelling characteristics, their coefficient of moisture permeability and their nail holding load (method A). As shown in Table 4, the increase in the amount of phenol resin added to the layer of jute cloth on either side of the central palm fiber mat does nothing to reduce the moisture permeability of the finished board while at the same time increasing the board's bending strength, wet bending strength and nail holding load.

### 〈Experimental board No.4〉

Dainippon Ink and Chemicals phenol resin TD4302, prepared to a solid weight concentration of 20wt%, was sprayed onto half-broken oil palm fibers (mean diameter: approx. 400µm, length: approx. 110mm, distance from end to end in curled form: approx. 40mm) in a solid weight ratio of 15wt% of said oil palm fibers. Oil palm fibers with a unit weight of 1.60kg/m² and oil palm fibers impregnated with phenol resin in a solid weight ratio of 15wt% (unit weight: 0.24kg/m²) of said oil palm fibers were then pressed together at room temperature with a compressive force of 800Pa for 30 minutes.

The oil palm fiber mat was then dried in an oven at 80°C for one hour to remove the moisture. Next, the oil palm fiber mat was pressed in a heat press at 170°C for 10 minutes to create a board 4.5mm thick. The finished board had a density of 0.39g/cm³, a bending strength of 1,000N/cm², a coefficient of moisture permeability of 5.65µg/(m².s.Pa) at relative humidity of 90% at 40°C, a nail holding load (method A) of 58N, and a nail holding load (method B) of 3.2N. Method B for the measurement of nail holding load differs from method A in the following respects. As shown in Figure 13-(b), a round steel N90 nail is first hammered into the finished board. The board is then secured in position and the nail pulled at a point 5cm from its head through a distance of 2.5cm in a direction perpendicular to the nail's longitudinal axis. The load required to achieve this displacement is then measured (hereinafter referred to as "method B").

### 〈Comparison board No.3〉

Dainippon Ink and Chemicals phenol resin TD4302, prepared to a solid weight concentration of 20wt%, was sprayed onto broken down coconut palm fibers (mean diameter: approx. 200µ m, length: approx. 100mm, distance from end to end in curled form: approx. 75mm) in a solid weight ratio of 15wt% of said coconut palm fibers. Coconut palm fibers with a unit weight of 1.60kg/m² and coconut palm fibers impregnated with phenol resin in a solid weight ratio of 15wt% (unit weight: 0.24kg/m²) of said coconut palm fibers were then pressed together at room temperature with a compressive force of 800Pa for 30 minutes. The coconut palm fiber mat was then dried in an oven at 80°C for one hour to remove the moisture content. Next, the coconut palm fiber mat was pressed by a compression molding machine at 170°C for 10 minutes to create a board 4.5mm thick with a density of 0.39g/cm³. The finished board had a bending strength of 970N/cm², a coefficient of moisture permeability of 5.18µg/(m².s.Pa) at relative humidity of 90% at 40°C, a nail holding load (method A) of 51N, and a nail holding load (method B) of 1.7N.

Table 5 compares experimental board No.4 with comparison board No.3 in terms of their composition, the unit weight of their constituent palm fiber per square meter, the quantity of phenol resin applied, and their overall thickness and density. Table 6 compares experimental board No.4 with comparison board No.3 in terms of their composition, their bending strength, their coefficient of moisture permeability and their nail holding load (methods A and B). As shown in Table 6, the nail holding loads measured both by method A and by method B were found to be greater in the case of the board made of oil palm fiber than of the board made of coconut fiber. The oil palm fiber board is thus to be preferred.

### INDUSTRIAL APPLICABILITY

By using boards or other molded materials of this invention to form the windbreak layer of a house wall, not only is it possible to secure the smooth passage of water vapor from the interior of the house through the ventilation layer, it is also possible to provide stable support for the heat insulating layer while at the same time using said boards or other molded materials to reinforce the structural sections around the windbreak layer.

The boards and other molded materials having a specific range of thickness bending strength and coefficient of permeability provide an excellent balance between strength and moisture permeability.

The boards and other molded materials with a fabric woven from hemp fibers, applied to at least one side and/or to the interior of a fiber mat, combine outstanding strength and moisture permeability with a tendency to lose little of their shape or strength when absorbing water or moisture.

When oil palm fiber has been used in place of coconut palm fiber, the manufacturing process will also consume considerably less energy and this will enable significant cuts to be made in the costs of manufacture. Furthermore, an oil palm fiber based board tends to grip a nail hammered into it more strongly than a similar coconut palm fiber based board and this is to be preferred.

The incorporation of a form of brace into the body of said boards or other molded materials not only improves the work of construction by eliminating the need for the separate addition of bracing, it also enhances the heat insulating function by eliminating the reduction of heat insulating space which commonly results from the separate addition of brace. Furthermore, by adding a woven or nonwoven fabric or else a sheet of some sort to braced boards or other molded materials, it is possible to make them into excellent reinforcing materials.

Braced boards or other molded materials of the type described above provide the user with the following effect.

Since a plurality of braces are fitted at intervals parallel to the sides of the board or other molded materials, the spaces between the braces are effectively left clear to act as a ventilation layer.

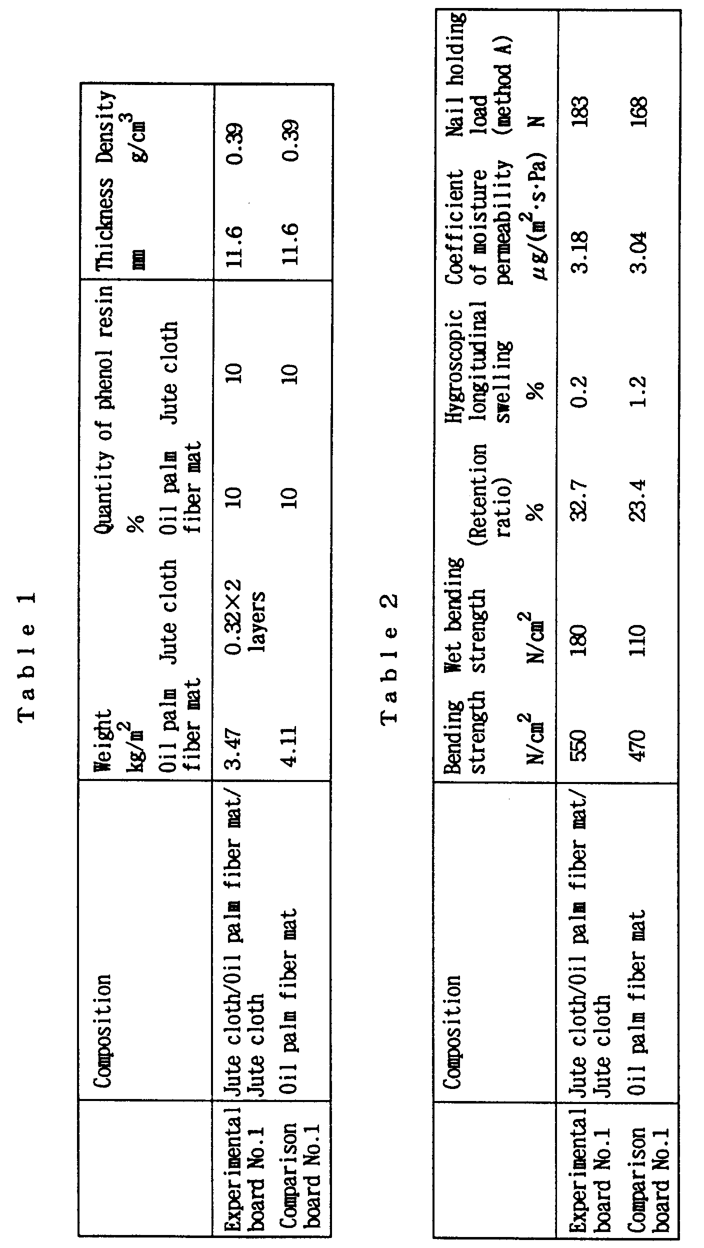

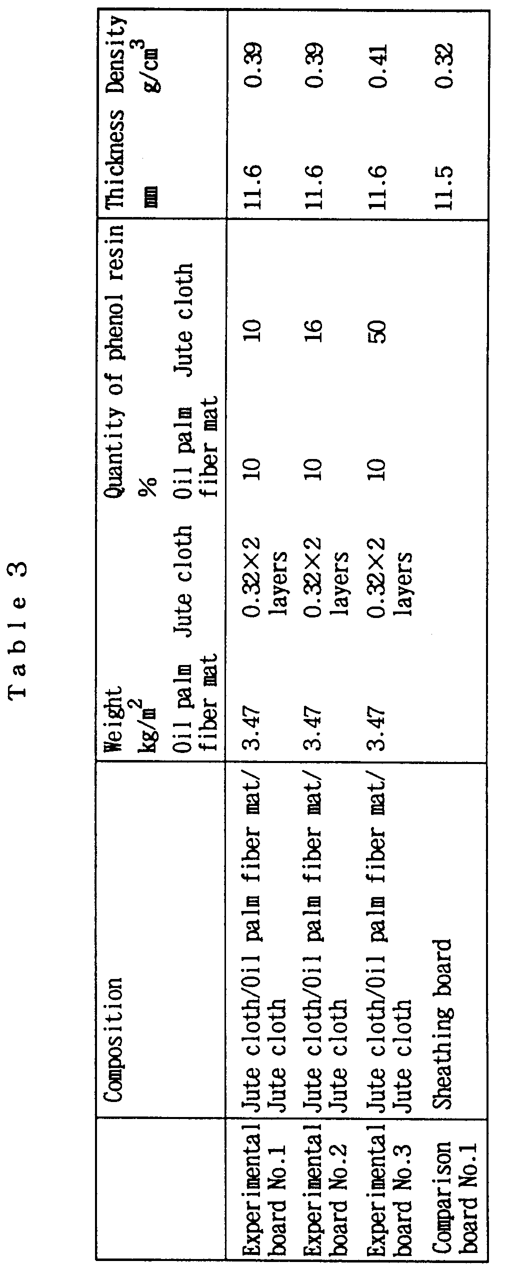

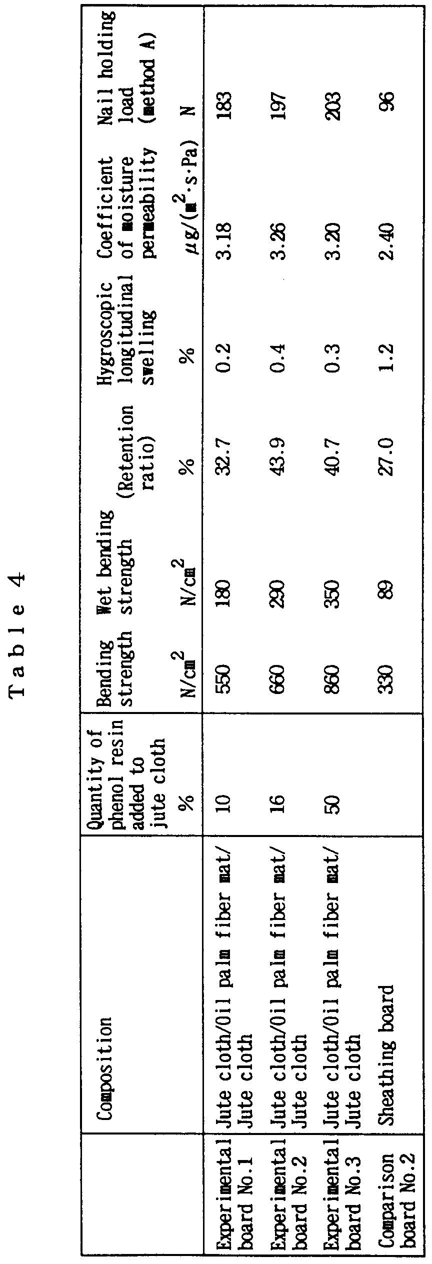

**Table 5**

| | Composition | Weight kg/m² | Quantity of phenol resin % | Thickness mm | Density g/cm³ |
|---|---|---|---|---|---|
| Experimental board No.4 | Oil palm fiber mat | 1.60 | 15 | 4.5 | 0.39 |
| Comparison board No.3 | Coconut palm fiber mat | 1.60 | 15 | 4.5 | 0.39 |

**Table 6**

| | Composition | Bending strength N/cm² | Coefficient of moisture permeability µg/(m²·s·Pa) | Nail holding load | |
|---|---|---|---|---|---|
| | | | | (method A) N | (method B) |
| Experimental board No.4 | Oil palm fiber mat | 1000 | 5.65 | 58 | 3.2 |
| Comparison board No.3 | Coconut palm fiber mat | 970 | 5.18 | 53 | 1.7 |

## Claims

1. A board or other molded material made by applying layers of at least one woven or nonwoven fabric made from natural vegetable fibers such as hemp fibers or at least one sheet made of thin strips of a natural vegetable fibers such as bamboo to at least one side and/or to the interior of a fiber mat made from palm fibers mixed if necessary with some other natural vegetable fibers such as hemp fibers or bamboo fibers, by impregnating said materials with a curable resin and by compression molding them into the required shape.

2. The board or other molded material according to Claim 1 in which said board or other molded material is about 3 to 25mm thick, has a bending strength of about 300 to 5,000N/cm², and has a coefficient of moisture permeability of about 0.1 to 10µg (m².s.Pa).

3. The board or other molded material according to Claim 1 or Claim 2 in which a woven fabric made of hemp fibers and weighing about 100 to 1,200g/m² is applied to at least one side and/or to the interior of the fiber mat.

4. The board or other molded material according to Claim 1, Claim 2 or Claim 3 in which the palm fibers used are oil palm fibers.

5. A method for the manufacture of the board or other molded material according to Claim 1 in which natural vegetable fibers such as hemp fibers or bamboo fibers are mixed if necessary with split palm fibers to form a fiber mat, said fiber mat then being fitted on at least one side and/or in its interior with one or more pieces of woven or nonwoven fabric made of natural vegetable fibers such as hemp fibers or one or more sheets made of thin strips of a natural vegetable fibers such as bamboo, the resultant layered material being impregnated with a curable resin and then compression molded to the required shape.

6. A board or other molded material with integral brace incorporated into at least one side and/or into its interior, said board or other molded material being made by applying, if necessary, layers of at least one woven or nonwoven fabric made from natural vegetable fibers such as hemp fibers or at least one sheet made of thin strips of a natural vegetable fibers such as bamboo to at least one side of and/or to the interior of a fiber mat made from palm fibers mixed if necessary with some other natural vegetable fibers such as hemp fibers or bamboo fiber, by impregnating said materials with a curable resin and by compression molding them into the required shape.

7. The board or other molded material with integral brace according to Claim 6 in which a plurality of braces are fitted at intervals more or less parallel to the sides of said board or other molded material.
